# EUROPEAN PATENT SPECIFICATION

(11) **EP 2 180 617 B1**
(45) Date of publication and mention of the grant of the patent: **20.07.2011**
(21) Application number: 08018483.1
(22) Date of filing: 22.10.2008
(51) Int. Cl.: H04J 3/06, H04B 7/185

(54) **Method and system for measuring the delay of a transmission channel**
Verfahren und System zum Messen der Verzögerung eines Übertragungskanals
Procédé et système pour mesurer le délai d'un canal de transmission

(43) Date of publication of application: 28.04.2010
(73) Proprietor: Rohde & Schwarz GmbH & Co. KG, 81671 München (DE)
(72) Inventor: Tu Hoai, Nam, Hanoi (VN)
(74) Representative: Körfer, Thomas

(56) References cited:
- EP-A- 0 585 087
- EP-A- 1 926 238
- US-A1- 2007 161 347

## Description

The application concerns a method and a system for measuring the delay of a duplex transmission channel, especially of a duplex transmission channel.

Especially in VHF ground-to-air communication, several transmitter stations are required within the flight information region (FIR) in order to increase the coverage of the radio signal. The transmitters are located at distant stations and transmit the same radio signal at offset carrier frequencies. In order to cancel the echo effect, audio delay devices must be inserted in the transmission links between the control center and the transmitter stations. To set up the required delay correctly, it is necessary to measure the audio delay over the link, i.e. the time needed for an audio signal to propagate from the control center to the transmitter station.

The present patent application describes a simple and practical method and system to measure the audio signal delay over the transmission channel.

From JP 2000-292565 A a device and method for measuring the transmission line propagation delay time is known. For this purpose a test signal is generated and is inserted into the transmission line in order to make a round trip. However, as the method and device triggers the rising time of the complete test signal, this method is not very accurate especially when applied to noisy transmission channels.

The document EP 1 926 238 A1 shows a ranging method and system for passive optical networks. A ranging signal is sent to a splitter loop-back device while a time of sending is recorded. The splitter loop-back device returns a signal. It is determined, if the initial ranging signal is equivalent to the returning signal. From the time difference of the initial ranging signal and the returning ranging signal ranging is performed.

The document EP 0 585 087 A1 discloses a ranging method for use in TDMA-systems on tree-and-branch optical networks. An optical line termination node sends a ranging signal superimposed on top of a transmitted data signal. The signal is received and returned to the optical line termination node. The phase difference or time between the sent and received signals is determined. The distance between the two nodes is proportional to the phase difference or time between sending and receiving of the signals.

It is the object of the present invention to provide a method and a device for measuring the delay of a transmission channel which is accurate also under bad and noisy conditions. With respect to the method, the object is solved by the features of claim 1. With respect to the system, the object is solved by the features of claim 8. The dependent claims define further developments of the invention.

According the invention a test signal with a marking portion is generated and applied to a first end of the transmission channel. The test signal with the marking portion then propagates through the transmission channel. When the test signal is received at the second end of the transmission channel, it is returned back into the transmission channel so that it performs a round trip. The marking portion is detected as applied to the first end of the transmission channel and also as received at the first end of the transmission channel after the round trip. Then the time difference between the occurrence of the marking portion of the test signal as applied to the first end of the transmission channel and the occurrence of the marking portion of the test signal as received at the first end of the transmission channel is determined. From this time difference the propagation time of the transmission channel can be calculated by dividing the time difference by two.

When the measured delay time of the transmission channel is used in a delay circuit at another transmission station, there will be no echo between the transmission signal emitted from a first station supplied with the transmission line and the second station supplied via the delay circuit. The transmission channel preferably is a duplex transmission channel.

It is preferred that the test signal has at least two levels of amplitudes, whereby one level of the amplitude is assigned to the marking portion. By using a different amplitude for the marking portion with respect to the other signal portions, the marking portion can be easily identified.

It is preferred that the test signal comprises a first set of pulses of a first amplitude to establish the marking portion followed by a second set of pulses of a second amplitude which significantly differs from the first amplitude. The first amplitude can be higher or lower than the second amplitude. The pulses preferably have a sinusoidal waveform. The advantage of a sinusoidal waveform is that the signal has a low bandwidth and can be used within transmission channels implemented for low bandwidth audio signals.

The marking portion of the applied test signal can be detected by a first counter and the marking portion of the received test signal can be detected by the second counter. Both counters can detect the event of raising and/or falling edge of the pulses of the marking portion of the test signal. It is preferred that the detecting level for detecting the event of raising and/or falling edge is at first set in a manner to detect all pulses of the test signal and is then set in a manner only to detect the pulses of the marking portion. This can also be done in a different order beginning with pulses of the marking portion. By this procedure, the marking portion can easily be distinguished from the general signal portion of the test signal.

Specific advantages of the application will be understood from the following description of an embodiment of the invention in conjunction with the drawings. In the drawings:
- Fig. 1: shows a general set-up for ground-to-air communication;
- Fig. 2: shows a block diagram of the inventive system for measuring the delay of a transmission channel;
- Fig. 3: shows a diagram of a test signal used within the inventive method and system and
- Fig. 4: shows a flow chart of the inventive method.

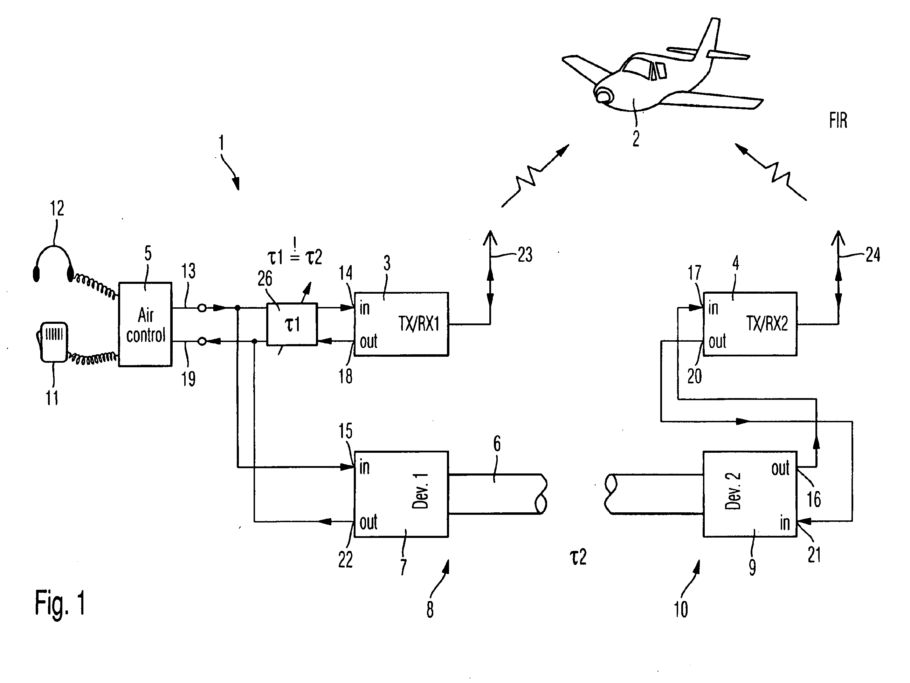

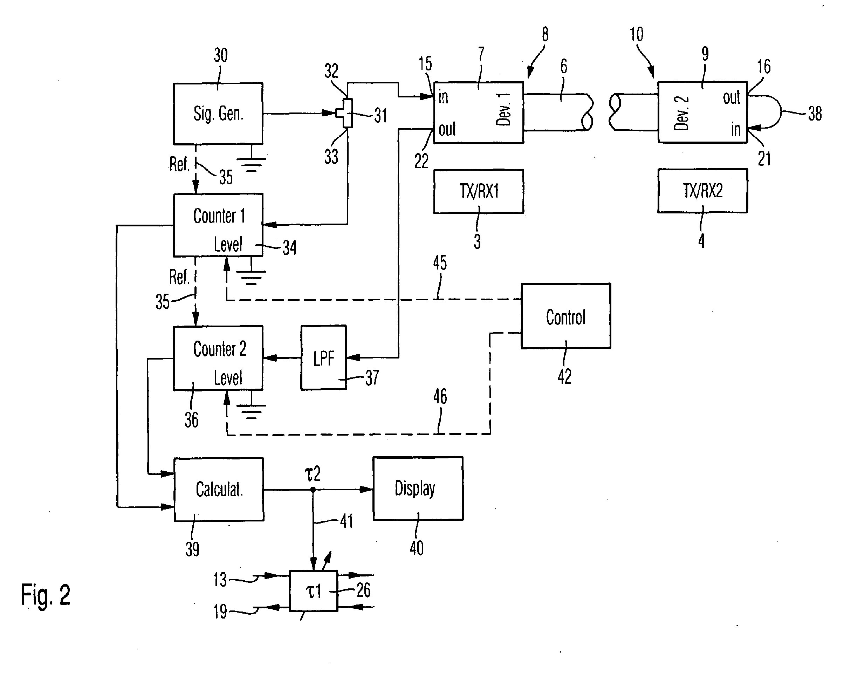

Fig. 1 shows the general set-up of a ground-to-air communication to which the present application can be applied. The ground-to-air communication 1 is used to communicate with planes 2 in a specific flight information region FIR. Several transmitters are located at different locations and transmit the same radio signal at offset carrier frequencies. In the example illustrated in Fig. 2 only to transmission and receiving stations 3 and 4 are shown. In this embodiment one transmission and receiving station 3 is connected to an air control center 5 via a delay element 26. Whereas the other transmission and receiving station 4 is connected to the air control center 5 via a transmission channel 26. The transmission channel can be a private or public telephone line and is preferably a duplex transmission channel. Alternatively also two simplex transmission channels can be used instead of a single duplex transmission channel.

The transmission channel has a first transmission device 7 located at a first end of the transmission channel 6 and a second transmission device 9 located at a second end of the transmission channel 6. The transmission channel can be any transmission link like public or private telephone lines, satellite channels, radio links, ad-hoc networks and so on. The transmission device is the respective terminal of the transmission channel such as a user equipment of a telephone network, a transceiver for a radio link or a ground station for a satellite communication channel.

An air-traffic controller speaks into a microphone 11 at the air control center 5 directed to the pilot located in the airplane 2. The air-traffic controller listens to the pilot with his headset 12.

An output line 13 of the air control center 5 is connected to an audio input port 14 of the first transmission and receiving station 3 through a first path of the variable delay element 26. The output line 13 of the air control center 5 is simultaneously connected to an audio input port 15 of the first transmission device 7 of the transmission channel 6. An audio output port 16 of the second transmission device 9 of the transmission channel 6 is connected to an audio input port of the second transmission and receiving station 4. An audio output port 18 of the first transmission and receiving station 3 is connected to an input line 19 of the air control center 5 through a second path of the variable delay element 26. An audio output port 20 of the second transmission and receiving station 4 is connected to an input port 21 of the second transmission device 9 of the transmission channel 6. An output port 22 of the first transmission device 7 is connected to the input line 19 of the air control center 5.

An audio voice signal generated by the air-traffic controller is transmitted by the first transmission and receiving station 3 via its antenna 23 and by the second transmission and receiving station 4 via its antenna 24. The carrier frequencies normally have a frequency offset of e.g. ± 5 kHz, so that the pilot only hears the signal with the higher field strength. If the airplane 2 is, however, in an intermediate area in which the coverage areas of the first transmission and receiving station 3 and the second transmission and receiving station 4 overlap, the pilot within the airplane 2 hears the voice signal of the air-traffic controller both from the first transmission and receiving station 3 and from the second transmission and receiving station 4. Due to the propagation delay in the transmission channel 6, there will be an echo effect if the propagation delay is not compensated. It is the task of the variable delay element 26 to compensate the propagation delay in the transmission channel 6. If the delay element 26 has the same time delay than the transmission channel 6 the echo will be cancelled. In order to accurately tune the time delay τ1 of the delay element 26 equal to the time delay τ2 of the transmission channel 6 the time delay of the transmission channel 6 τ2 must be measured accurately. This is done with the inventive method and system.

Fig. 2 shows an embodiment of the inventive system for measuring the delay of the duplex transmission channel 6. A signal generator 30 is connected with an optional power splitter 31 which splits the signal generated by the signal generator 30 into two identical subsignals. The first output 32 of the power splitter 31 is connected with the input port 15 of the first transmission device 7 at the first end 8 of the transmission channel 6. The second output 33 of the power splitter 31 is connected with a first counter 34 which serves as detecting means for detecting the marking portion of the test signal generated by the signal generator 30. This first counter 34 detects the event of raising and/or falling edges of the pulses included in the test signal as it is applied to the input port 15 of the first transmission device 7 of the transmission channel 6. The exact functionality of the counter 34 is explained later on. The counter 34 receives a reference signal Ref. via a reference signal line 35 from the signal generator 30. This reference signal can be for example a 10 MHz signal.

The output port 22 of the first transmission device 7 of the transmission channel 6 is directly or indirectly connected to a second counter 36. As the output signal received at the output port 22 of the transmission device 7 might be very noisy, it might be applicable to use a low pass filter 37 between the output port 22 and the input of counter 36 in order to provide a low pass filtering of the test signal as received from the transmission channel 6. Also counter 36 preferably receives the reference signal Ref. of the reference signal line 35.

The output port 16 of the second transmission device 9 at the second end 10 of the transmission channel 6 is directly connected to the input port 21 of the second transmission device 9 via a loop connector 38. It should be noted that in this measurement configuration neither the first transmission and receiving station 3 nor the second transmission and receiving station 4 is connected with the respective transmission devices 7 or 9, respectively.

An output of the first counter 34 and an output of the second counter 36 are connected to a calculation unit 39 so that the counter values counted by both counters 34, 36 are transferred to the calculation unit 39. The calculation 39 unit serves as a determining means for determining the time difference 2·τ2 between the occurrence of the marking portion of the test signal as applied to the audio input port 15 of the first transmission device 7 and the occurrence of the marking portion of the test signal as received at the audio output port 22 of the first transmission device 7. An output value τ2 can be calculated from the time difference 2·τ2 by the division of 2, can be displayed at a display device 40 and can then be used for adjusting τ1 of the variable delay element 26. The output value τ2 can also be directly supplied to the variable delay element 26 via a control line 41 so that the adjustment of τ1 is performed automatically.

A control unit 42 controls the trigger level of both counters 34 and 36 through trigger level control lines 45 and 46 as will be explained later. It should be noted that the calculation unit 39, the display device 40 and the control unit 42 can be part of a computer device, especially of a personal computer.

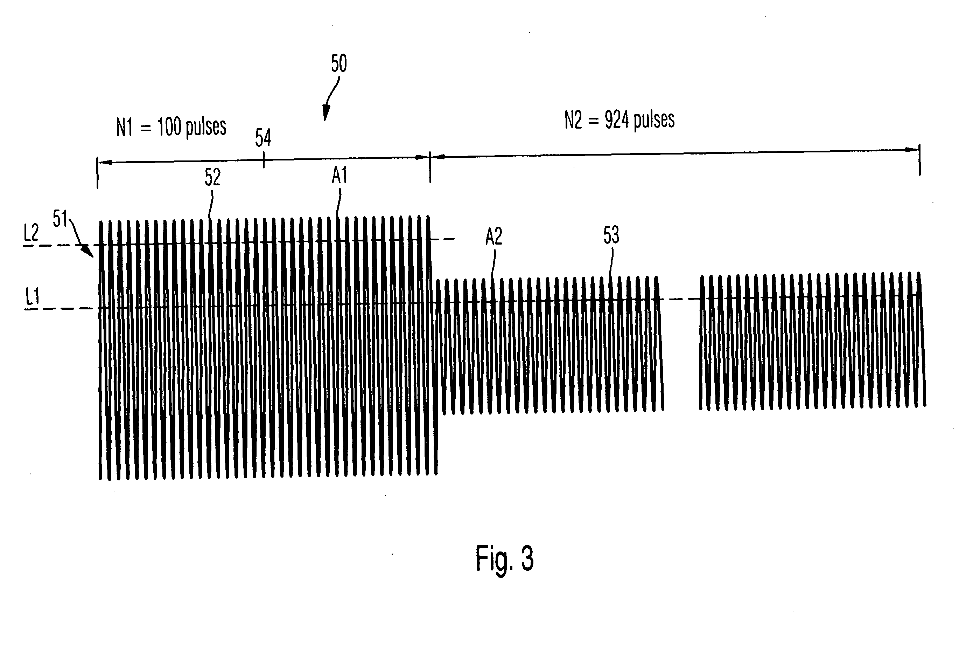

Fig. 3 shows a preferred configuration of the test signal 51 generated by the signal generator 30. In this embodiment a specific first number N1 of pulses 52 with a first amplitude A1 are generated, which establish the marking portion 50 of the test signal 51. After the marking portion 50 there are generated a specific second number N2 of pulses 53 for the rest of the test signal which does not belong to the marking portion 50. These pulses have a second amplitude A2 which significantly differs from the first amplitude A1 of the first pulses which establish the marking portion 50. In the embodiment shown in Fig. 3 all pulses have a sinusoidal waveform. The marking portion 50 comprises N1=100 pulses 52 and the rest of the test signals comprise another N2=924 pulses 53 of the same frequency so that the test signal is periodical within 1024 pulses. After these 1024 pulses, the marking portion 50 is again generated.

Of course different numbers N1 and N2 of pulses can be used but the number N1 of pulses should be high enough to be evaluated by the counters 34, 36 as described later on. In embodiment as shown in Fig. 3 the first amplitude A1 of the pulses 52 of the marking portion 50 is higher than the amplitude A2 of the following pulses 53 of the rest of the test signal 50. However, it is also possible, that the amplitude A1 of the marking pulses 52 is lower than the amplitude A2 of the pulses of the rest of the test signal. Instead of the amplitude or additional to the amplitude, the pulses 52 of the marking portion can also differ in frequency and/or phase from the pulses 53 of the rest of the test signal.

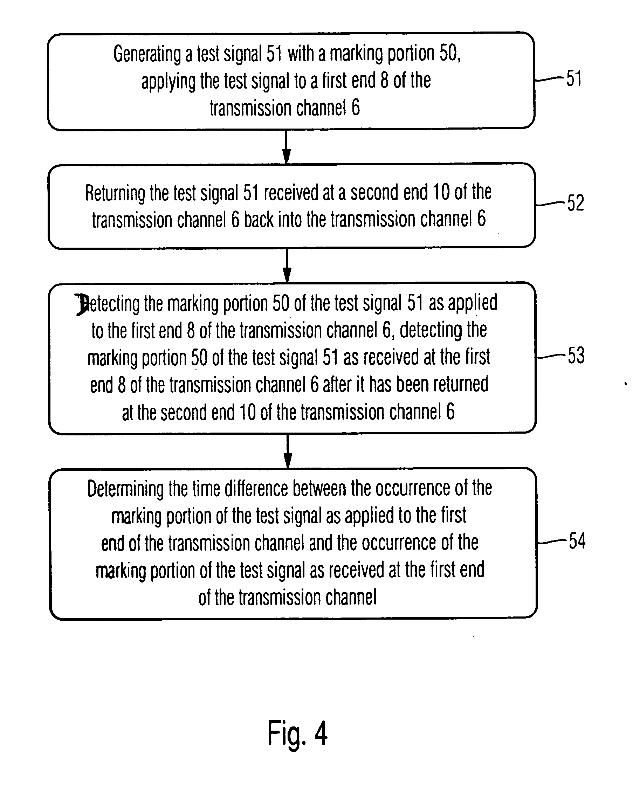

Fig. 4 shows a flow chart of the general concept of the inventive method.

In a first step S1 the test signal 51 with the marking portion 50 is generated and applied to the first end 8 of the transmission channel 6 via the input port 15 of the first transmission device 7.

In the second step S2 the test signal 51 received at the second transmission device 9 at the second end 10 of the transmission channel 6 is returned back into a transmission channel 6. This is done by directly connecting the output port 16 with the input port 21 of the second transmission device 9 by using the loop connector 38.

In the third step S3 the marking portion 50 of the test signal 51 as it is applied to the first end 8 of the transmission channel 6 is detected. In the embodiment of Fig. 2 this is done with the first counter 34. Additionally, the marking portion 50 of the test signal 51 as it is received at the first end 8 of the transmission channel 6 after it has been returned at the second end 10 of the transmission channel 6 is detected. In the embodiment of Fig. 2 this is done with the second counter 36.

In the fourth step S4 the time difference 2·τ2 between the occurrence of the marking portion 50 of the test signal 50 as it is applied to the first end 8 of the transmission channel 6 and the occurrence of the marking portion 50 of the test signal 50 as it is received at the first end 8 of the transmission channel 6 is determined. In the embodiment of Fig. 2 this is done by the calculation unit 39.

The inventive method is now explained with respect to Figs. 2, 3 and 4.

The first counter 34 counts all pulses of the test signal 51 which is generated by the signal generator 30 and which is supplied through the power splitter 31. The counter 34 triggers the raising edges of the pulses 52, 53 of the test signal 51. It can alternatively or additionally also count the falling edges.·At first the control unit 42 sets the trigger level L1 to the value L1 as indicated in Fig. 2. At this trigger level counter 34 counts all pulses 52, 53, i.e. pulses 52 of the marking portion 50 and pulses 53 of the remaining part of the test signal 51. The signal shown in Fig. 3 has, for example, a frequency of 1024 kHz which can easily pass through the audio bandwidth of the transmission device 7 and 9 and of the transmission channel 6 which is typically 0.3-3.4 kHz. The signal can be generated by using 16,000 points from a 16 kBit memory.

Now the control unit 42 increases the trigger level for counter 34 to the value L2 through the level control line 45. Now counter 34 only counts the pulses 52 of the marking portion 50. Instead of 1024 pulses per second only 100 pulses per second are counted. The mean time value of all raising and/or falling edges of all N1=100 pulses indicates the time middle 54 of the marking portion 50. Thus the occurrence of the marking portion 50 can be measured quite accurately.

The second counter 36 counts the pulses 52, 53 of the test signal 51 received at the output port 22 of the first transmission devices 7. As this signal might be quite noisy because of the long signal path forth and back through the transmission channel 6 it might be indicated to use a low pass filter 37 before the signal is passed to the input port of counter 36. Control unit 42 controls the trigger level of counter 36 through level control line 46. As described before, the trigger level is first set to a low value L1 and is then increased to higher trigger level L2. This ensures only the marking portion 50 is measured after the counter value has changed from 1024 pulses per second to only 100 pulses per second.

Both counters 34 and 36 can be implemented as two channels of a common counter device. Such counter devices normally have an integrated feature to measure the time interval or time offset between the signals supplied to the two different channels. For example R&S HAMEG programmable counter HM8123 allows a time interval measurement by pressing the button TI_{A-B} when the two signals are supplied to channel A and channel B.

As a signal generator 30 the device R&S HAMEG function generator HM8131-2 can be used. The repetition rate can be 1 Hz so that the generator generates every second one complete waveform with 1024 pulses. In this case a 50 KHz low pass filter 37 should be used. A suitable peak-to-peak amplitude might be 500 mV, but depends on an actual transmission equipment such as coder, encoder, etc.

Preferably an interpolation is performed between the last maximum peak of pulses 52 with amplitude A1 and the first minimum peak of pulses 53 with amplitude A2 or vice versa. The smooth interpolation reduces the bandwidth of the test signal 50 and guarantees that the test signal 50 can be transported within the limited bandwidth of transmission channel 6.

An oscilloscope might be used to observe the two test signals in a first view. This would help to realize if there is a signal at all before performing the adjustment.

The occurrence of this method has been checked by using an audio delay generator. This test revealed a good accuracy of ± 0.05 ms when the delay range is from 1.5 ms - 800 ms, which is good enough for most transmission circuits with VSAT and landline links.

The scope of the protection is not limited to the embodiment shown in the drawings and described before. The number N1 of pulses 52 which establish the marking portion 50 can be significantly lower as 100 pulses and of course also higher. How many pulses 52 are actually used for the marking portion 50 strongly depends on the signal to noise ratio SNR and the signal distortion of the transmission channel. Instead of a power splitter 31 a simple circuit node like a coaxial T-piece can be used. The low pass filter 37 is not necessary in all cases.

## Claims

1. Method for measuring the delay of time (τ2) of a transmission channel (6) with the steps of:
- generating (S1) a test signal (51) with a marking portion (50),
- applying (S1) the test signal (51) to a first end (8) of the transmission channel (6),
- returning (S2) the test signal (51) received at a second end (10) of the transmission channel (6) back into the transmission channel (6),
- detecting the marking portion (50) of the test signal (51) as applied to the first end (8) of the transmission channel (6),
- detecting (S3) the marking portion (50) of the test signal (51) as received at the first end (8) of the transmission channel (6) after it has been returned at the second end (10) of the transmission channel (6),
- determining (S4) the time difference (2·τ2) between the occurrence of the marking portion (50) of the test signal (51) as applied to the first end (8) of the transmission channel (6) and the occurrence of the marking portion (50) of the test signal (51) as received at the first end (8) of the transmission channel (6),
- calculating the delay of time (τ2) of the transmission channel (6) by dividing the time difference (2·τ2) by 2,
**characterized in that**
the test signal (51) comprises a first set of pulses (52) of a first amplitude (A1) to establish the marking portion (50) followed by a second set of pulses (53) of a second amplitude (A2) which significantly differs from the first amplitude (A1).

2. Method according to claim 1,
wherein the test signal (51) has at least two levels of amplitudes (A1, A2) and one level of amplitude (A1) is assigned to the marking portion (50).

3. Method according to claim 1 or 2,
wherein the first amplitude (A1) is higher than the second amplitude (A2).

4. Method according to any of the claims 1 to 3,
wherein each pulse (52, 53) has a sinusoidal waveform.

5. Method according to any of claims 1 to 4,
wherein the marking portion (50) of the applied test signal (51) is detected by a first counter (34) detecting the event of raising and/or falling edge of the pulses (52, 53) of the test signal (51) as applied to the first end (8) of the transmission channel (6) and
wherein the marking portion (50) of the received test signal (51) is detected by a second counter (36) detecting the event of raising and/or falling edge of the pulses (52, 53) of the test signal (51) as received at the first end (8) of the transmission channel (6) after it has been returned at the second end (10) of the transmission channel (6).

6. Method according to any of claims 1 to 5,
wherein a detecting level (L1, L2) for detecting the event of raising and/or falling edge is at first set in a manner to detect all pulse (52, 53) and is then set in a manner only to detect the pulses (52) of the marking portion (50).

7. Method according to any of claims 1 to 6,
wherein the duplex transmission channel (6) is connectable to transmission and/or receiving stations (3, 4) for a radio network, especially to a radio network (1) for ground-to-air communication with airplanes (2).

8. System for measuring the delay time (τ2) of a transmission channel (6) comprising:
- a signal generator (30) for generating a test signal (51) with a marking portion (50), which is connectable directly or indirectly to an audio input (15) of a first transmission device (7) at a first end (8) of the transmission channel (6),
- a loop connector (38) for connecting an audio output (16) of a second transmission device (9) at a second end (10) of the transmission channel (6) with an audio input (21) of the second transmission device (9),
- first detecting means (34) for detecting the marking portion (50) of the test signal (51) as applied to the audio input (15) of the first transmission device (7),
- second detecting means (36) for detecting the marking portion (50) of the test signal (51) as received at an audio output (22) of the first transmission device (7) after it has been returned at the second end (10) of the transmission channel (6); and
- determining means (39) for determining the time difference (2·τ2) between the occurrence of the marking portion (50) of the test signal (51) as applied to the audio input (15) of the first transmission device (7) and the occurrence of the marking portion (50) of the test signal (51) as received at the audio output (22) of the first transmission device (7) and for calculating the delay time (τ2) of the transmission channel (6) by dividing the time difference (2 x τ2) by 2,
**characterized in that**
the test signal (51) comprises a first set of pulses (52) of a first amplitude (A1) to establish the marking portion (50) followed by a second set of pulses (53) of a second amplitude (A2) which significantly differs from the first amplitude (A1).

9. System according to claim 8,
wherein the test signal (51) hast at least two levels of amplitudes (A1, A2) and one level of amplitude (A1) is assigned to the marking portion (50).

10. System according to claim 8 or 9,
wherein the first amplitude (A1) is higher than the second amplitude (A2).

11. System according to any of the claims 8 to 10,
wherein each pulse (52, 53) has a sinusoidal waveform.

12. System according to any of the claims 8 to 11,
wherein the first detecting means comprises a first counter (34) and the second detecting means comprises a second counter (36).

13. System according to any of the claims 8 to 12,
wherein the marking portion (50) of the applied test signal (51) is detected by the first counter (34) detecting the event of raising and/or falling edge of the pulses (52, 53) of the test signal (51) as applied to the first end (8) of the transmission channel (6) and
wherein the marking portion (50) of the received test signal (51) is detected by the second counter (36) detecting the event of raising and/or falling edge of the pulses (52, 53) of the test signal (51) as received at the first end (8) of the transmission channel (6) after it has been returned at the second end (10) of the transmission channel (6).

14. System according to claim any of the claims 8 to 12,
wherein the system comprises a controller (42) for setting detecting levels (L1, L2) for detecting the event of raising and/or falling edge at first set in a manner to detect all pulse (52, 53) and then in a manner only to detect the pulses (52) of the marking portion (50).

## Patentansprüche

1. Verfahren zum Messen der Zeitverzögerung (τ2) eines Übertragungskanals (6) mit den Schritten:
- Erzeugen (S1) eines Testsignals (51) mit einem Markierungsanteil (50),
- Einspeisen (S1) des Testsignals (51) in ein erstes Ende (8) des Übertragungskanals (6),
- Zurückleiten (S2) des an einem zweiten Ende (10) des Übertragungskanals (6) empfangenen Testsignals (51) zurück in den Übertragungskanal (6),
- Detektieren des Markierungsanteiles (50) des Testsignals (51), wie es in das erste Ende (8) des Übertragungskanals (6) eingespeist wird,
- Detektieren (S3) des Markierungsanteiles (50) des Testsignals (51), wie es am ersten Ende (8) des Übertragungskanals (6) empfangen wird, nachdem es am zweiten Ende (10) des Übertragungskanals (6) zurückgeleitet worden ist,
- Bestimmen (S4) der Zeitdifferenz (2·τ2) zwischen dem Auftreten des Markierungsanteiles (50) des Testsignals (51), wie es in das erste Ende (8) des Übertragungskanals (6) eingespeist wird, und dem Auftreten des Markierungsanteiles (50) des Testsignals (51), wie es am ersten Ende (8) des Übertragungskanals (6) empfangen wird,
- Berechnen der Zeitverzögerung (τ2) des Übertragungskanals (6) durch Dividieren der Zeitdifferenz (2·τ2) durch 2,
**dadurch gekennzeichnet,**
**dass** das Testsignal (51) eine erste Reihe von Impulsen (52) mit einer ersten Amplitude (A1), um den Markierungsanteil (50) festzulegen, gefolgt von einer zweiten Reihe von Impulsen (53) mit einer zweiten Amplitude (A2) umfasst, die sich von der ersten Amplitude (A1) signifikant unterscheidet.

2. Verfahren nach Anspruch 1, wobei das Testsignal (51) zumindest zwei Amplitudenpegel (A1, A2) aufweist und wobei ein Amplitudenpegel (A1) dem Markierungsanteil (50) zugeordnet ist.

3. Verfahren nach Anspruch 1 oder 2, wobei die erste Amplitude (A1) höher ist als die zweite Amplitude (A2).

4. Verfahren nach einem der Ansprüche 1 bis 3, wobei jeder Impuls (52, 53) einen sinusförmigen Schwingungsverlauf aufweist.

5. Verfahren nach einem der Ansprüche 1 bis 4, wobei der Markierungsanteil (50) des eingespeisten Testsignals (51) durch einen ersten Zähler (34) detektiert wird, der das Ereignis einer ansteigenden und/oder abfallenden Flanke der Impulse (52, 53) des Testsignals (51) detektiert, wie es in das erste Ende (8) des Übertragungskanals (6) eingespeist wird,
und wobei der Markierungsanteil (50) des empfangenen Testsignals (51) durch einen zweiten Zähler (36) detektiert wird, der das Ereignis einer ansteigenden und/oder abfallenden Flanke der Impulse (52, 53) des Testsignals (51) detektiert, wie es am ersten Ende (8) des Übertragungskanals (6) empfangen wird, nachdem es am zweiten Ende (10) des Übertragungskanals (6) zurückgeleitet worden ist.

6. Verfahren nach einem der Ansprüche 1 bis 5, wobei ein Detektierpegel (L1, L2) zum Ermitteln des Ereignisses einer ansteigenden und/oder abfallenden Flanke zuerst in einer Weise festgelegt wird, um sämtliche Impulse (52, 53) zu detektieren, und sodann in einer Weise festgelegt wird, um lediglich die Impulse (52) des Markierungsanteiles (50) zu detektieren.

7. Verfahren nach einem der Ansprüche 1 bis 6, wobei der Duplex-Übertragungskanal (6) mit Sende- und/oder Empfangsstationen (3, 4) für ein Funknetzwerk, insbesondere mit einem Funknetzwerk (1) für eine Boden-Luft-Kommunikation mit Flugzeugen (2) verbindbar ist.

8. System zum Messen der Verzögerungszeit (τ2) eines Übertragungskanals (6), umfassend:
- einen Signalgenerator (30) zum Erzeugen eines Testsignals (51) mit einem Markierungsanteil (50), wobei der Signalgenerator mit einem Audio-Eingang (15) einer an einem ersten Ende (8) des Übertragungskanals (6) vorgesehenen ersten Sendevorrichtung (7) direkt oder indirekt verbindbar ist,
- einen Schleifenverbinder (38) zum Verbinden eines Audio-Ausgangs (16) einer an einem zweiten Ende (10) des Übertragungskanals (6) vorgesehenen zweiten Sendevorrichtung (9) mit einem Audio-Eingang (21) der zweiten Sendevorrichtung (9),
- eine erste Detektiereinrichtung (34) zum Detektieren des Markierungsanteiles (50) des Testsignals (51), wie es in den Audio-Eingang (15) der ersten Sendevorrichtung (7) eingespeist wird,
- eine zweite Detektiereinrichtung (36) zum Detektieren des Markierungsanteiles (50) des Testsignals (51), wie es an einem Audio-Ausgang (22) der ersten Sendevorrichtung (7) empfangen wird, nachdem es an dem zweiten Ende (10) des Übertragungskanals (6) zurückgeleitet worden ist, und
- eine Bestimmungseinrichtung (39) zum Bestimmen der Zeitdifferenz (2·τ2) zwischen dem Auftreten des Markierungsanteiles (50) des Testsignals (51), wie es in den Audio-Eingang (15) der ersten Sendevorrichtung (7) eingespeist wird, und dem Auftreten des Markierungsanteiles (50) des Testsignals (51), wie es am Audio-Ausgang (22) der ersten Sendevorrichtung (7) empfangen wird, und zum Berechnen der Verzögerungszeit (τ2) des Übertragungskanals (6) durch Dividieren der Zeitdifferenz (2·τ2) durch 2,
**dadurch gekennzeichnet,**
**dass** das Testsignal (51) eine erste Reihe von Impulsen (52) mit einer ersten Amplitude (A1) zur Festlegung des Markierungsanteiles (50), gefolgt von einer zweiten Reihe von Impulsen (53) mit einer zweiten Amplitude (A2) umfasst, die sich von der ersten Amplitude (A1) signifikant unterscheidet.

9. System nach Anspruch 8, wobei das Testsignal (51) zumindest zwei Amplitudenpegel (A1, A2) aufweist und wobei ein Amplitudenpegel (A1) dem Markierungsanteil (50) zugeordnet ist.

10. System nach Anspruch 8 oder 9, wobei die erste Amplitude (A1) höher ist als die zweite Amplitude (A2).

11. System nach einem der Ansprüche 8 bis 10, wobei jeder Impuls (52, 53) einen sinusförmigen Schwingungsverlauf aufweist.

12. System nach einem der Ansprüche 8 bis 11, wobei die erste Detektiereinrichtung einen ersten Zähler (34) umfasst und wobei die zweite Detektiereinrichtung einen zweiten Zähler (36) umfasst.

13. System nach einem der Ansprüche 8 bis 12, wobei der Markierungsanteil (50) des eingespeisten Testsignals (51) durch den ersten Zähler (34) detektiert wird, der das Ereignis einer ansteigenden und/oder abfallenden Flanke der Impulse (52, 53) des Testsignals (51) detektiert, wie es in das erste Ende (8) des Übertragungskanals (6) eingespeist wird,
und wobei der Markierungsanteil (50) des empfangenen Testsignals (51) durch den zweiten Zähler (36) detektiert wird, der das Ereignis einer ansteigenden und/oder abfallenden Flanke der Impulse (52, 53) des Testsignals (51) detektiert, wie es am ersten Ende (8) des Übertragungskanals (6) empfangen wird, nachdem es am zweiten Ende (10) des Übertragungskanals (6) zurückgeleitet worden ist.

14. System nach einem der Ansprüche 8 bis 12, wobei das System eine Steuereinrichtung (42) zum Festlegen von Detektierpegeln (L1, L2) zum Detektieren des Ereignisses einer ansteigenden und/oder abfallenden Flanke umfasst, wobei die Detektierpegel zuerst in einer Weise festgelegt sind, um sämtliche Impulse (52, 53) zu detektieren, und sodann in einer Weise, um lediglich die Impulse (52) des Markierungsanteiles (50) zu detektieren.

## Revendications

1. Procédé pour mesurer le retard (τ2) d'un canal de transmission (6) comprenant les étapes consistant à :
- générer (S1) un signal test (51) avec une partie de repère (50),
- appliquer (S1) le signal test (51) à une première extrémité (8) du canal de transmission (6),
- renvoyer (S2) le signal test (51) reçu à une seconde extrémité (10) du canal de transmission (6) dans le canal de transmission (6),
- détecter la partie de repère (50) du signal test (51) tel qu'appliqué à la première extrémité (8) du canal de transmission (6),
- détecter (S3) la partie de repère (50) du signal test (51) tel que reçu à la première extrémité (8) du canal de transmission (6) après qu'il a été renvoyé à la seconde extrémité (10) du canal de transmission (6),
- déterminer (S4) la différence de temps (2·τ2) entre l'apparition de la partie de repère (50) du signal test (51) tel qu'appliqué à la première extrémité (8) du canal de transmission (6) et l'apparition de la partie de repère (50) du signal test (51) tel que reçu à la première extrémité (8) du canal de transmission (6),
- calculer le retard (τ2) du canal de transmission (6) en divisant la différence de temps (2·τ2) par 2,
**caractérisé en ce que**
le signal test (51) comporte un premier ensemble d'impulsions (52) d'une première amplitude (A1) afin d'établir la partie de repère (50) suivi par un second ensemble d'impulsions (53) d'une seconde amplitude (A2) qui diffère de façon significative de la première amplitude (A1).

2. Procédé selon la revendication 1,
dans lequel le signal test (51) possède au moins deux niveaux d'amplitude (A₁, A2) et un niveau d'amplitude (A1) est assigné à la partie de repère (50).

3. Procédé selon la revendication 1 ou 2,
dans lequel la première amplitude (A1) est supérieure à la seconde amplitude (A2).

4. Procédé selon l'une quelconque des revendications 1 à 3,
dans lequel chaque impulsion (52, 53) présente une forme d'onde sinusoïdale.

5. Procédé selon l'une quelconque des revendications 1 à 4,
dans lequel la partie de repère (50) du signal test appliqué (51) est détectée par un premier compteur (34) détectant l'apparition d'un front ascendant et/ou d'un front descendant des impulsions (52, 53) du signal test (51) tel qu'appliqué à la première extrémité (8) du canal de transmission (6) et
dans lequel la partie de repère (50) du signal test reçu (51) est détectée par un second compteur (36) détectant l'apparition d'un front ascendant et/ou d'un front descendant des impulsions (52, 53) du signal test (51) tel que reçu à la première extrémité (8) du canal de transmission (6) après qu'il a été renvoyé à la seconde extrémité (10) du canal de transmission (6).

6. Procédé selon l'une quelconque des revendications 1 à 5,
dans lequel un niveau de détection (L1, L2) pour détecter l'apparition d'un front ascendant et/ou d'un front descendant est d'abord fixé de manière à détecter toutes les impulsions (52, 53) et est ensuite fixé de manière à détecter uniquement les impulsions (52) de la partie de repère (50).

7. Procédé selon l'une quelconque des revendications 1 à 6,
dans lequel le canal de transmission duplex (6) peut être relié à des stations de transmission et/ou de réception (3, 4) pour un réseau radio, en particulier un réseau radio (1) pour une communication sol-air avec des avions (2).

8. Système pour mesurer le retard (t2) d'un canal de transmission (6) comportant :
- un générateur de signaux (30) pour générer un signal test (51) comportant une partie de repère (50), qui peut être relié directement ou indirectement à une entrée audio (15) d'un premier dispositif de transmission (7) à une première extrémité (8) du canal de transmission (6),
- un connecteur en boucle (38) pour relier une sortie audio (16) d'un second dispositif de transmission (9) à une seconde extrémité (10) du canal de transmission (6) avec une entrée audio (21) du second dispositif de transmission (9),
- un premier moyen de détection (34) pour détecter la partie de repère (50) du signal test (51) tel qu'appliqué à l'entrée audio (15) du premier dispositif de transmission (7),
- un second moyen de détection (36) pour détecter la partie de repère (50) du signal test (51) tel que reçu à une sortie audio (22) du premier dispositif de transmission (7) après qu'il a été renvoyé à la seconde extrémité (10) du canal de transmission (6) ; et
- un moyen de détermination (39) pour déterminer la différence de temps (2·τ2) entre l'apparition de la partie de repère (50) du signal test (51) tel qu'appliqué à l'entrée audio (15) du premier dispositif de transmission (7) et l'apparition de la partie de repère (50) du signal test (51) tel que reçu à la sortie audio (22) du premier dispositif de transmission (7) et pour calculer le retard (τ2) du canal de transmission (6) en divisant la différence de temps (2 x τ2) par 2,
**caractérisé en ce que**
le signal test (51) comporte un premier ensemble d'impulsions (52) d'une première amplitude (A1) pour établir la partie de repère (50) suivi par un second ensemble d'impulsions (53) d'une seconde amplitude (A2) qui diffère de façon significative de la première amplitude (A1).

9. Système selon la revendication 8,
dans lequel le signal test (51) présente au moins deux niveaux d'amplitude (A1, A2) et un niveau d'amplitude (A1) est assigné à la partie de repère (50).

10. Système selon la revendication 8 ou 9,
dans lequel la première amplitude (A1) est supérieure à la seconde amplitude (A2).

11. Système selon l'une quelconque des revendications 8 à 10,
dans lequel chaque impulsion (52, 53) présente une forme d'onde sinusoïdale.

12. Système selon l'une quelconque des revendications 8 à 11,
dans lequel le premier moyen de détection comporte un premier compteur (34) et le second moyen de détection comporte un second compteur (36).

13. Système selon l'une quelconque des revendications 8 à 12,
dans lequel la partie de repère (50) du signal test appliqué (51) est détectée par le premier compteur (34) détectant l'apparition d'un front ascendant et/ou d'un front descendant des impulsions (52, 53) du signal test (51) tel qu'appliqué à la première extrémité (8) du canal de transmission (6) et
dans lequel la partie de repère (50) du signal test reçu (51) est détectée par le second compteur (36) détectant l'apparition d'un front ascendant et/ou d'un front descendant des impulsions (52, 53) du signal test (51) tel que reçu à la première extrémité (8) du canal de transmission (6) après qu'il a été renvoyé à la seconde extrémité (10) du canal de transmission (6).

14. Système selon l'une quelconque des revendications 8 à 12,
dans lequel le système comporte un contrôleur (42) pour déterminer des niveaux de détection (L1, L2) afin de détecter l'apparition d'un front ascendant et/ou d'un front descendant déterminé tout d'abord de manière à détecter toutes les impulsions (52, 53) et ensuite de manière à détecter uniquement les impulsions (52) de la partie de repère (50).
